(19) Europäisches Patentamt

European Patent Office

Office européen des brevets

(11) **EP 1 355 246 A1**

(12) **EUROPEAN PATENT APPLICATION**

(43) Date of publication:
**22.10.2003 Bulletin 2003/43**

(51) Int Cl.7: **G06F 17/60**

(21) Application number: **02405302.7**

(22) Date of filing: **15.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ABB RESEARCH LTD.**
**8050 Zürich (CH)**

(72) Inventors:
• **Poncet, Andreas**
**8049 Zürich (CH)**

• **Orkisz, Michal**
**30-076 Krakow (PL)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method for simulating project task risk impact**

(57)    The inventive method for simulating impacts of project task risk factor on total project attributes comprises the steps of determining a number of mathematical expectations of said total project attributes for a set of different values of said first task risk factor, said total project attribute depending on aggregated project task attributes and project task interdependencies, said expectations being determined by performing a large number of different realizations of possible scenarios with stochastic risk factors according to a given risk factor probability distribution of at least one second project task, while keeping said first task risk factor constant; determining the standard deviation of said expectations, said standard deviation quantifying the impact of said first task risk factor on said total project attribute.

Fig.1

EP 1 355 246 A1

**Description**

Background of the Invention

The invention relates to the field of project management. It relates to a method for simulating in a data processing system individual impacts of at least one first project task risk factor on at least one total project attribute.

Background Art

One major practical challenge of project management consists in keeping an overview of the different tasks, the task risk factors, and their possible impact on total project attributes, such as completion time and project costs. Risk factors may be, e.g., product quality, technical hurdles, qualitative and quantitative fluctuation of human resources, and occurrence of external events.

There is risk because these factors, all of which influence the project outcome, are uncertain to a certain extent at the beginning of a project. The role of a system for project risk assessment is to capture and display the overall effect of uncertainties on completion time and cost.

But in addition it is crucial for a project manager to be able to discern which tasks are at most "sensitive", i. e., "responsible" for the uncertainty in the total project cost. Discerning between the different impacts is indeed a necessary preliminary step before deciding on preventive actions or risk mitigation measures focused at the most "problematic" tasks.

Project management software, such as Microsoft's Corporations MS Project, typically allow a fine representation of the project execution phase by decomposition into tasks or sub-tasks. These tasks are connected according to their sequential interdependency. An estimated fixed duration is assigned to each task.

State-of-the-art systems measure "sensitivities" with respect to risk factors by frequency of the critical path, or by correlation coefficients (e.g., of task duration with overall cost), which are the basis for mono-dimensional graphical representation (such as a Tornado diagram).

Unfortunately, the "sensitivity" measures used by these methods are heuristic: Two tasks that appear equally frequently on the critical path do not necessarily have equal impact on the final project duration or cost. Moreover, because tasks of a project typically are not just sequential but are coupled in a complicated way, the dependence of the total duration (or cost) is not a linear function of the individual task durations-therefore correlation coefficient is a very crude measure of impact.

In consequence, the state-of-the-art systems mentioned above do not allow the project manager to quantify the real impact of each individual risk factor on the overall project in a precise way.

JP 6 124 285 describes a system which allows training of a project manager by simulation of events that affect project activities.

Summary of the Invention

It is an object of the present invention to provide a method for simulating and measuring impacts of project-task risk factors on the entire project in a data processing system.

It is a further object of the present invention to provide a computer program loadable into an internal memory of a digital computer, comprising computer program code means to make, when said program is loaded in the computer, the computer execute the inventive method.

This object is achieved by the inventive method for simulating in a data processing system individual impacts of at least one first project task risk factor on at least one total project attribute according to Claim 1.

The inventive method comprises the steps of:

determining a number of mathematical expectations of said total project attribute for a set of different values of said first task risk factor, said total project attribute depending on aggregated project task attributes and project task interdependencies,

said expectations being determined by performing a large number of different realizations of possible scenarios with stochastic risk factors according to a given risk factor probability distribution of at least one second project task, while keeping said first task risk factor constant; and

determining the standard deviation of said expectations, said standard deviation quantifying the impact of said first task risk factor on said total project attribute.

The inventive computer program is preferably recorded on a computer readable medium, and executes, when run on the computer, the method according to the invention.

Brief Description of the Drawings

The present invention will be explained in detail hereafter by reference to the drawings, wherein:

Fig. 1      shows the three-module structure of the inventive project task impact decomposition system,

Figs. 2 and 3      show exemplary penalty/ bonus functions,

Fig. 4      shows an exemplary task dependence structure,

Figs. 5 and 6      show smoothed histograms with cumulated risk profiles, and

Fig. 7      shows a criticality map of individual project tasks.

Description of the Preferred Embodiments

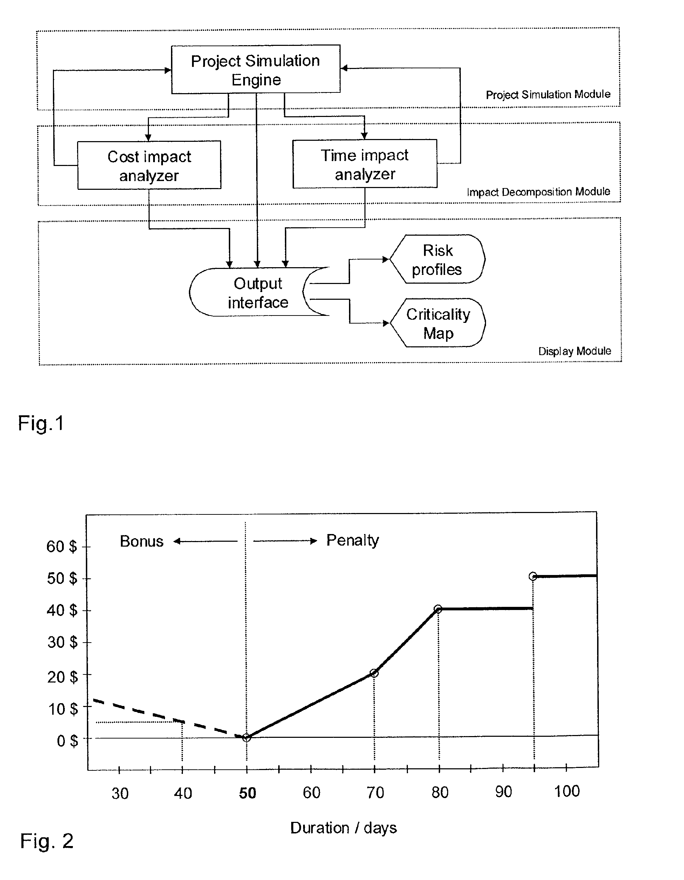

Fig. 1 shows the structure of the inventive project task impact decomposition system, consisting of the following three modules:

- Project Simulation Module, for determining total project variable risk profiles, e.g. *project duration risk profile;*

- Impact Decomposition Module, for determining impact of a single project task riskfactor on total project variable, e.g. *cost impact*; and

- Display Module, multidimensional display of impact of all project tasks' risk-factors

The inventive system is an enhancement of the project duration and cost simulation engine described hereafter, which outputs total project variable risk profiles, e.g. overall duration or cost risk profile (global view). The inventive system aims at zooming into a project, i.e. at assessing and discerning the impacts caused by individual task-related or general risk factors on project attributes such as project duration or project cost. The system displays the impact, i. e. the criticality, of each of the projects risk-factors (local view).

*Project Simulation Module*

The project duration and cost simulation engine is used to describe a project as a set of interdependent tasks whose durations are uncertain within some assumed limits, and whose completion before or after a specified deadline may carry a prescribed task bonus or penalty. It performs the following actions:

1. Fitting of duration distributions to given mode, lower and upper quantiles (or defaults)

For statistical modeling, all probability density functions used are expressed in terms of five parameters:

lower and upper percentiles $\alpha_1$ and $\alpha_u$,

lower and upper quantiles $x_1$ and $x_u$, and

the mode $x_{MP}$.

Often the number of parameters is reduced by fixing the lower and upper percentiles (e.g., to 0.05 and 0.95 respectively). The latter parameters must fulfill the condition

$$0 < \alpha_1 < \frac{1}{2} < \alpha_u < 1.$$

The three remaining parameters are called "optimistic" (e.g., 5%-quantile $x_1$), "realistic" (mode $x_{MP}$), and "pessimistic" values (e.g., 95%-quantile $x_u$).

They must fulfill

$$x_1 < x_{MP} < x_u.$$

The uncertain variable of interest x represents duration or cost, hence small values are associated with "good" and large values with "bad".

Any given probability distribution is in general described by a different set of specific parameters. They allow to compute the distribution easily though are difficult to specify by the user. Therefore these specific parameters must be fitted (either analytically or numerically) so that the resulting probability density function is consistent with the specified parameters.

As an example, consider the Weibull distribution, which can be given an asymmetric shape. The standard distribution is defined by

$$p_0(x \mid a,b) = \frac{b}{a^b} x^{b-1} \exp\left[-\left(\frac{x}{a}\right)^b\right] \qquad x \geq 0,$$

which is characterized by two parameters $a$ and b. In order to let the uncertain variable take arbitrary lower bound (not necessarily zero), we include a third parameter c (for location):

$$p(x \mid a,b,c) = \frac{b}{a^b}(x-c)^{b-1} \exp\left[-\left(\frac{x-c}{a}\right)^b\right] \qquad x \geq c.$$

The three user parameters (optimistic, realistic, and pessimistic) $x_1, x_{MP}, x_u$ - besides the lower and upper percentiles $\alpha_1, \alpha_u$ - constrain the distribution parameters as follows:

$$\begin{cases} \int_{-\infty}^{x_1} p(x \mid a,b,c)dx = \alpha_1 \\ \int_{-\infty}^{x_u} p(x \mid a,b,c)dx = \alpha_u \\ dp(x_{MP} \mid a,b,c)/dx = 0 \end{cases}$$

Solving now this system of three implicit equations leads to

$$a = \frac{x_u - x_{MP}}{\gamma_u^d - (1-d)^d}$$

$$b = \frac{1}{d}$$

$$c = x_{MP} - a(1-d)^d,$$

where $d$ is the root of

$$(1-\rho)(1-d)^d + \rho\gamma_u^d - \gamma_1^d = 0$$

subject to

$$\max\{1- \gamma_u, 0\} < d < 1- \gamma_1$$

and $\rho, \gamma_1, \gamma_u$ are the constants

$$\rho = \frac{x_i - x_{MP}}{x_u - x_{MP}}$$

$$\gamma_1 = -\log(1-\alpha_1)$$

$$\gamma_u = -\log(1-\alpha_u).$$

2. Representation of task duration costs by penalty/ bonus functions, i.e., (nonlinear) functions of task durations or completion dates

Each project task can have an associated penalty/ bonus function. This function specifies penalty or bonus for completing a task before or after a specific deadline or depending on the task's duration.

Two examples will illustrate sample penalty/ bonus functions.

In the example of Fig. 2 the horizontal axis represents the task duration (in days), while the vertical axis represents the cost (in USD). Depending on the duration of the task either a bonus is awarded or penalty is imposed. Completing the task 50 days after project start carries no bonus or penalty. For early finish there is a bonus specified by the bonus slope (0.5 USD/day), e.g. 5 $ for a duration of 40 days. The bonus rises the sooner the task is completed. A duration of more than 50 days results in a penalty. The penalty rises depending on the delay. In the shown example the penalty rises with two different gradients. A first gradient of 1 $/ day for a duration up to 70 days and a second gradient of 2 $/day for a duration up to 80 days. In the shown example a constant penalty of 40 $ is defined for a duration of 80 to 100 days. For a duration of more than 95 days a maximum penalty (cap) of 50 $ is imposed.

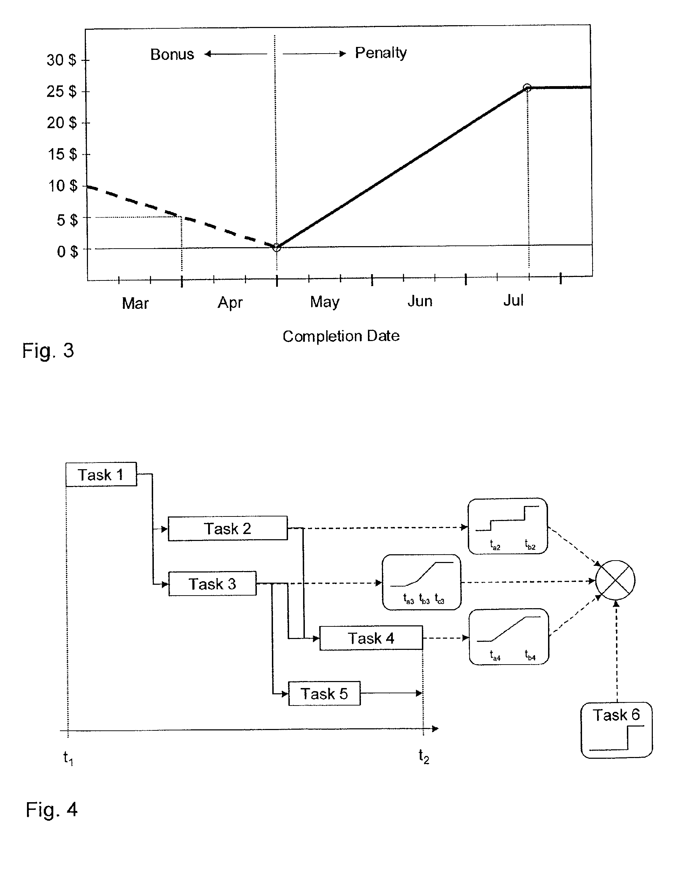

In the example of Fig. 3 the horizontal axis represents the task completion date, while the vertical axis represents the cost (in USD). Depending on the completion date of the task either a bonus is awarded or penalty is imposed. This is particularly interesting in the case of multiple task dependencies, i.e. the start of a second task being dependent on the completion of a first task. Completion of the task prior to April 30 results in a bonus, e.g. 5 $ for a completion by March 31. The bonus rises the sooner the task is completed. A completion after April 30 results in a penalty. The penalty rises the later the task is completed. In the shown example the penalty rises linear up to a maximum penalty of 25 $ for task completion after July 20.

Such penalty/ bonus functions are expressed as piecewise linear functions (sets of corner points marked as circles). When a task's duration is computed, its penalty/ bonus (if specified) is evaluated by interpolating between the corner points. The penalties/ bonuses of individual tasks are combined to form the overall project's penalty/ bonus.

Task-related costs are thus explicitly modeled as a function of task completion or duration. This is unlike the existing commercial solutions, which either model costs as resource-dependent or simulate them as random variables correlated with tasks. In the inventive system, the function parameters (such as bonus rates) specify the contract in terms of liquidated damages.

3. Representation of discrete-type risk factors (e.g., quality) by a synthetical task (the duration of which typically does not influence project completion time)

The project modeled can contain a number of discrete risk factors, whose occurrence implies certain penalties. For example, an unexpected transformer failure leads to a penalty of 50 kUSD. The quality risks are represented in the model as tasks with zero completion, so they don't impact the overall project duration. Their probability distribution is well defined (e.g., a uniform distribution on the interval 0-1), and a penalty function maps this distribution to the specified penalty with given probability. For example, a penalty function with penalty 50 kUSD between 0 and 0.1 and penalty 0 between 0.1 and 1 combined with the mentioned uniform distribution would model a 10% chance of 50 kUSD penalty. (Of course, the risk factor can be given more than two possible stages, for instance: no failure/ between 1 and n failures/ more than n failures.) This solution has the advantage that the same mechanism can be used for duration-dependent penalties/ bonuses and discrete risk factors.

4. Specification of task dependence structure

A project is represented by a collection of interdependent tasks, for each of which a duration probability distribution and possibly a specified penalty is introduced.

The task dependence structure is originally modeled using the underlying scheduling system (e.g., Microsoft Project).

A successor task can depend on its predecessor in four ways:

- successor cannot start until the predecessor starts
- successor cannot start until the predecessor finishes
- successor cannot finish until the predecessor starts
- successor cannot finish until the predecessor finishes

For the purpose of computing project duration, these conditions are converted to mathematical functions specifying how the successor task's start and finish times can be computed based on the start and finish times of the predecessors.

As an illustration, consider the example represented in Fig. 4 with five tasks and one quality risk factor. In this case, the project starts with task 1. Tasks 2 and 3 start as soon as task 1 is ended. Task 4 can be started only after both tasks 2 *and* 3 are finished, whereas task 5 can start as soon as task 2 or task 3 is finished. Finally, the project is completed after all tasks are finished.

In order to formulate the task dependencies mathematically, the following notation is introduced

$$s_k \stackrel{\wedge}{=} \text{start date of task } k$$

$$d_k \stackrel{\wedge}{=} \text{duration of task } k$$

$$t_k \stackrel{\wedge}{=} \text{finish date of task } k.$$

The fact that task 4 cannot start until tasks 2 and 3 finish is represented mathematically as follows: the start day of task 4 is set equal to the maximum of the finish day of task 2 and finish day of task 3. The finish day of task 4 is described as the start day of task 4 plus the duration of task 4, as the finish does not depend on the other tasks.

The predecessor (task *i*)/ successor (task *k*) dependencies listed above are expressed by

i. $\quad s_k = \max(s_i, r)$

ii. $\quad s_k = \max(t_i, r)$

iii. $\quad t_k = \max(s_k + d_k, s_i, r)$

iv. $\quad t_k = \max(s_k + d_k, t_i, r),$

where *r* corresponds to the remaining conditions, e.g.,

$$r = \min(t_i, t_j)$$

means 'as soon as task *i* or task *j* is finished'.

In the example of Fig. 4 (with $t = 0$ as project start date)

$$s_1 = 0 \qquad t_1 = s_1 + d_1 = d_1$$

$$s_2 = t_1 \qquad t_2 = s_2 + d_2$$

$$s_3 = t_1 \qquad t_3 = s_3 + d_3$$

$$s_4 = \max(t_2, t_3) \qquad t_4 = s_4 + d_4$$

$$s_5 = \min(t_2, t_3) \qquad t_5 = s_5 + d_5$$

$$s_6 = 0 \qquad t_6 = 0 \qquad \text{(quality risk factor)}$$

$$t = \max(t_1, t_2, t_3, t_4, t_5, t_6) \qquad \text{(total project duration)}.$$

Task 6 is introduced artificially to represent a quality risk factor, as explained above.

Since $t_6$ is set to zero, task 6 does not influence the project completion time $t$, although it does so for the project cost $y$.

Liquidated damages are calculated as described above.

For task $k$, let $f_k(\cdot; \theta_k)$ be the penalty/bonus function parameterized by $\theta_k$, and $y_k$ be the corresponding liquidated damage. In the case of a completion-related penalty,

$$y_k = f_k(t_k; \theta_k)$$

whereas in the case of a duration-related (or quality-related) penalty,

$$y_k = f_k(d_k; \theta_k).$$

Of course, if no penalty/ bonus is attached to task $k$, then

$$f_k(\cdot; \theta_k) \equiv 0.$$

The overall liquidated damages are obtained by

$$y = \sum_k y_k \, .$$

In the example of Fig. 4, if task 2 is completed before a certain time $t_{a2}$, a pre-defined bonus is received; whereas if it is completed later than another given time $t_{b2}$, a penalty is charged. A similar clause applies to task 3 and 4, although bonus and penalty are proportional to delay (up to some cap).

Finally, the bonuses/ penalties are aggregated to determine the net liquidated damages.

5. Simulation of random variables

The disclosed system calculates a large number of scenarios by repeatedly sampling values from the probability distributions for the uncertain variables. This can be done using Monte Carlo simulation, which randomly generates values for uncertain variables over and over to simulate a given model.

For each scenario the resulting evolution of the project is simulated by drawing each task's duration $d_k$ from that task's probability distribution $p(d_k)$ or, more generally, from the joint distribution $p(d_1, d_2, ...)$ if conditional dependencies between durations need to be introduced. The total project duration is evaluated using the task interdependence rules as explained above. Penalties are calculated for each task and summed up to give the overall project bonus/ penalty. Thus for each realization $i$ there are two results: total project duration

$$t^{(i)} = \max(t_1, t_2, t_3, t_4, t_5, t_6),$$

and total project penalty

$$y^{(I)} = \sum_k y_k \ .$$

*Impact decomposition module*

This module allows to determine how the uncertainty of a particular task affects the completion time and the cost of the whole project. In other words, it shows how critically the project depends on the unknown outcome of that task. In this sense, the more critical the task, the more impact it will have on the final project completion. "Criticality" is quantified by the project completion's standard deviation which is exclusively due to the specific task. Loosely speaking, criticality measures the final uncertainty (in time and cost) caused by the task uncertainty itself - and thus is expressed in time and currency units, respectively.

Criticality of a task with respect to the total project duration or project cost is evaluated by computing the corresponding distributions conditioned on the task duration (or, more generally, the value of the risk factor considered). Mathematically, the procedure can be described as follows.

Let $Y$ be the final variable of interest for the project (typically: total cost, or total duration). Let $X_i$ be the i-th (uncertain) risk factor (typically: duration of the i-th task) and $p_{X_i}(\cdot)$ be its given probability distribution. The criticality or impact of $X_i$ on the project result $Y$ is computed in four steps.

Step 1: For a number $n$ of preferably equidistant percentiles $\alpha^{(i)}$, e.g.,

$$(\alpha^{(1)}, \alpha^{(2)}, ..., \alpha^{(n)}) = (5\%, 10\%, ..., 95\%),$$

the corresponding quantiles are computed

$$x_i^{(k)} = F_{Xi}^{-1}(a^{(k)}) \qquad k=1,...,n,$$

where $F_{Xi}^{-1}$ is the inverse cumulative distribution of $X_i$, i.e., such that

$$F_{X_i}(x_i) = \int_{-\infty}^{x_i} p_{X_i}(x)\, dx \ .$$

The inverse cumulative distribution can be readily obtained from most of the available calculation software.

Compute the sample density values

$$q_i^{(k)} = p_{X_i}(x_i^{(k)}) \qquad k=1,...,n.$$

Step 2: For each $k = 1,...,n$, use the project simulation module to compute the mathematical expectation of $Y$ *while keeping $X_i$ equal to the particular value $x_i^{(k)}$*, i.e.,

$$\mu_i^{(k)} = E(Y|X_i = x_i^{(k)}) \qquad k=1,...,n.$$

In order to evaluate the expectation, the simulation engine performs a (large) number of independent Monte Carlo simulations, in which, however, the i-th risk factor is kept constant at $X_i = x^{(k)}$.

Step 3: Using the obtained values $(q_i^{(1)}, ..., q_i^{(n)})$ and $(\mu_i^{(1)}, ..., \mu_i^{(n)})$, compute the quantity

$$\Gamma_i \;=\; \sqrt{\frac{n/(n-1)}{\sum_{k=1}^{n} q_i^{(k)}}\sum_{k=1}^{n} q_i^{(k)}(\mu_i^{(k)}-\hat{\mu}_i)^2}\;/\;\sigma_Y,$$

where

$$\hat{\mu}_i \;=\; \frac{\sum_{k=1}^{n} q_i^{(k)}\mu_i^{(k)}}{\sum_{k=1}^{n} q_i^{(k)}}$$

and $\sigma_Y$ is the standard deviation of the project result $Y$ (previously computed from the overall project risk analysis). Because the quantity $\Gamma_i$ is the normalized standard deviation of $\mu_i^{(k)}$, it corresponds to the project result's standard deviation which is exclusively due to uncertainty of task $i$. Hence $\Gamma_i$ *quantifies the impact (or criticality) of the i-th risk factor on the overall result Y.*

Due to the normalization by the overall standard deviation, the quantity $\Gamma_i$ can take values only inside the interval

$$0 \le \Gamma_i \le 1$$

up to the residual statistical errors due to Monte Carlo sampling. The limit case $\Gamma_i = 0$ means that the *i*-th risk factor $X_i$ has *no* impact on *Y*. On the other hand, $\Gamma_i = 1$ means that the uncertainty of *Y* is *entirely* due to $X_i$.

Step 4: Repeat Steps 1 to 3 for each risk factor $X_i$.

By using the above procedure for the project *duration* as the variable *Y*, the individual time criticalities can be obtained, i.e., the tasks' risk impact on the total project duration. Then, by using the same procedure for the project *cost* as the variable *Y*, the individual cost criticalities can be obtained, i.e., the tasks' risk impact on the total project cost.

*Display module*

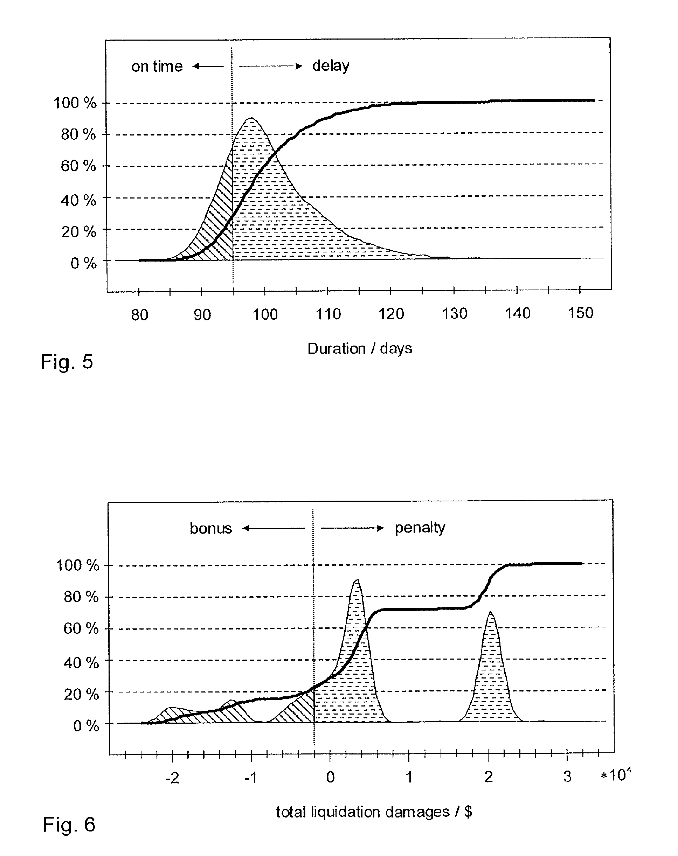

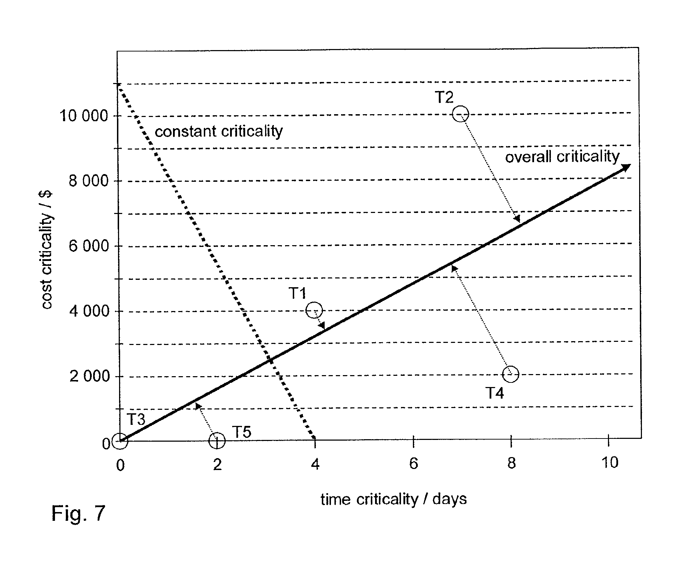

Besides visualizing the overall effect of uncertainties through the time and cost risk profiles (Fig. 5 and Fig. 6), the display module provides a project impact "zooming" instrument called *criticality map*, shown in Fig. 7. The criticality map is an instrument to visualize the tasks' risk impact on the overall project result, as obtained in the previous Section. It is represented as a two-dimensional map.

The two axes are: Duration (time) criticality and cost criticality. Time criticality and cost criticality are two distinct characteristics. The one does not necessarily imply the other. In the example represented, Task 5 does not affect penalties but only project completion time. Therefore on the map it appears on the time criticality axis. Task 1 is more cost critical than Task 4, but here the reverse holds for time criticality. Duration of Task 3 is modelled here as fixed, i. e., 100%-*certain* - hence there is actually no risk associated with it. The outcome of Task 3 is not critical (to project duration / cost) at all, because it is certain, and thus appears at the origin (0,0) of Fig. 7.

Because time and cost dependencies are typically nonlinear, "criticality" numbers of several tasks cannot be summed up. They can be compared, however. Due to a "chain reaction" effect, tasks at the beginning of a project tend to be more time and cost "critical" than final tasks, although this does not necessarily have to be the case.

Ranking tasks according to their criticality is crucial for prioritizing, e.g., allocation of additional resources. The two-dimensional map emphasizes that time and cost requirements implied by different tasks are typically in mutual conflict. Depending on the viewpoint (e.g., focus on time or focus on cost), the "criticality" ranking of the tasks may be different.

Because several factors may not be captured by the project model (e.g., if completion time is strategically important due to a competitor or due to the company's reputation), the project manager in practice may want to weigh time criticality vs. cost criticality when ranking tasks. For instance on Fig. 7, he may (subjectively) view a 4 days delay as "equally bad" as an additional cost of 11000 (for reasons not related to the bonuses / penalties already contained in the model). Since the line which connects these two points on the map is the locus of points of same "criticality", the "overall criticality" axis is defined by its perpendicular through the origin. This new axis finally allows the project manager to rank the tasks consistently with his policy. In the case of Fig. 7, the ranking in order of decreasing criticality / impact would be:

Task 2 > Task 4 > Task 1 > Task 5 > Task 3.

**Claims**

1. Method for simulating in a data processing system individual impacts of at least one first project task risk factor on at least one total project attribute; said method comprising the steps of:

   - determining a number of mathematical expectations of said total project attribute for a set of different values of said first task risk factor, said total project attribute depending on aggregated project task attributes and project task interdependencies,
   said expectations being determined by performing a large number of different realizations of possible scenarios with stochastic risk factors according to a given risk factor probability distribution of at least one second project task, while keeping said first task risk factor constant; and

   - determining the standard deviation of said expectations, said standard deviation quantifying the impact of said first task risk factor on said total project attribute.

2. Method of Claim 1, wherein said steps are repeated for each of several total project attributes.

3. Method of Claim 2, wherein said different total project attributes are depening on different project task attributes.

4. Method of any of the preceding Claims, wherein said steps are repeated for each of several first project task risk factors.

5. Method of any of the preceding Claims, wherein said impacts of said first project task risk factors on said total project attributes are displayed in a one-, two- or three-dimensional map, the total project attributes being assigned to the axes of said map.

6. Method of any of the preceding Claims, said standard deviation ($\Gamma_i$) being determined according to

$$\Gamma_i \;=\; \sqrt{\frac{n/(n-1)}{\sum_{k=1}^{n} q_i^{(k)}} \sum_{k=1}^{n} q_i^{(k)}(\mu_i^{(k)} - \hat{\mu}_i)^2} \;/\; \sigma_Y, \text{ with}$$

$$\hat{\mu}_i \;=\; \frac{\sum_{k=1}^{n} q_i^{(k)} \mu_i^{(k)}}{\sum_{k=1}^{n} q_i^{(k)}};$$

$$\mu_i^{(k)} = E(Y|X_i = x_i^{(k)}) \qquad k=1,...,n$$

being the mathematical expectations of the total project attribute $Y$ with the first task risk factor being kept konstant at $X_i = x_i^{(k)}$,
said total project attribute $Y$ being dependent on aggregated project task attributes and project task interdependencies;

$$q_i^{(k)} = p_{Xi}(x_i^{(k)}) \qquad k=1,...,n,$$

$p_{Xi}(\cdot)$ being the probability distribution of the first task risk factor ($X_i$), and

$$x_i^{(k)} = F_{Xi}^{-1}(\alpha^{(k)}) \qquad k=1,...,n$$

being the quantiles to a number ($k=1,...,n$) of preferably equidistant percentiles ($\alpha^{(1)},\alpha^{(2)},...,\alpha^{(n)}$) with $F_{Xi}^{-1}$ being the inverse cumulative distribution of $X_i$, such that

$$F_{X_i}(x_i) = \int_{-\infty}^{x_i} p_{X_i}(x)\, dx; \text{ and}$$

$\sigma_Y$ being the standard deviation of the total project attribute $Y$ determined in an overall project risk analysis.

7. A computer program loadable into an internal memory of a digital computer, comprising computer program code means to make, when said program is loaded in the computer, the computer execute the method of any of the preceding Claims.

Fig.1

Fig. 2

Fig. 3

Fig. 4

Fig. 5

Fig. 6

Fig. 7

European Patent
Office

**DECLARATION**

which under Rule 45 of the European Patent Convention
shall be considered, for the purposes of subsequent
proceedings, as the European search report

**Application Number**

EP 02 40 5302

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

A meaningful search is not possible on the basis of all claims because all claims are directed to  - Mathematical method  - Article 52 (2)(a) EPC - and  - Presentation of information  - Article 52 (2)(d) EPC -  The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---

-----

| Place of search | Date | Examiner |
|---|---|---|
| MUNICH | 7 February 2003 | Rother, S |

EPO FORM 1504 (P04C37)